# EUROPEAN PATENT APPLICATION

(11) **EP 3 726 454 A1**
(43) Date of publication of application: **21.10.2020**
(21) Application number: 18887486.1
(22) Date of filing: 07.12.2018
(51) Int. Cl.: G06Q 50/28, G06Q 10/08, G06F 21/31, B60R 5/04

(54) **VEHICLE CONTROL SYSTEM AND METHOD**

(30) Priority: 15.12.2017 CN 201711349430; 05.06.2018 CN 201810569263
(71) Applicant: Nio Nextev Limited, Hong Kong (CN)
(72) Inventor: ZHAO, Hanqing, Hong Kong (CN); ZHU, Hao, Hong Kong (CN); WENG, Yujian, Hong Kong (CN); ZENG, Jieyu, Hong Kong (CN); WANG, Ying, Hong Kong (CN)
(74) Representative: Vossius & Partner Patentanwälte Rechtsanwälte mbB
(86) International application number: PCT/CN2018/119749
(87) International publication number: WO 2019/114621

(57) **Abstract**

The invention relates to a vehicle control system and method, pertaining to the technical field of vehicle control. The vehicle control system of the invention comprises: a receiving sensor module, which is provided in a vehicle, and used for receiving a vehicle door unlocking signal sent from an electronic key provided in a vehicle user service terminal; and a vehicle control module, which is provided in the vehicle, and used for opening at least one vehicle door of the vehicle based on the vehicle door unlocking signal, wherein the vehicle user service terminal is a terminal held by someone other than an owner of the vehicle. While ensuring the safety of the user's vehicle, this system can not only simplify the work of the holder of the vehicle user service terminal, thereby significantly improving productivity of the holder, but also save time and provide great convenience for the user of the vehicle.

## Description

### Technical Field

The invention relates to the technical field of vehicle control, and more particularly, to a vehicle control system and method.

### Background Art

At present, the express delivery industry is developing rapidly, and there are a large number of express items and parcels that require couriers to deliver each day. However, in many cases, the receiving and sending users of an express item are not always at the registered receiving/sending address, so that the courier cannot deliver the express item and the parcel to the sending and receiving user.

Moreover, since a third person other than the owner of the vehicle does not have the authority to open the vehicle door (such as the trunk), it is difficult for the third person to provide a service for the locked vehicle, for example, it is difficult to deliver the express item to the current locked vehicle.

In addition, the unclear address and the similar address on the express item may cause the wrong delivery of the express item, which not only easily causes user dissatisfaction, but also wastes express delivery resources.

Those skilled in the art have always expected to obtain a simpler, more convenient and more efficient express item receiving and sending system.

### Summary of the Invention

One objective of the invention is to provide a vehicle control system that can be used to control the opening of a vehicle door of a vehicle.

To realize the above objective or other objectives, the invention provides the technical solutions as follows.
According to a first aspect of the invention, a vehicle control system is provided, comprising:
a receiving sensor module, which is provided in a vehicle, and used for receiving a vehicle door unlocking signal sent from an electronic key provided in a vehicle user service terminal; and
a vehicle control module, which is provided in the vehicle, and used for opening at least one vehicle door of the vehicle based on the vehicle door unlocking signal,
wherein the vehicle user service terminal is a terminal held by someone other than an owner of the vehicle.

In the vehicle control system according to an embodiment of the invention, the electronic key is for one-time use.

In the vehicle control system according to another embodiment of the invention or any of the above embodiments, the electronic key is an NFC key.

In the vehicle control system according to another embodiment of the invention or any of the above embodiments, the vehicle control system acquires and authenticates identity information about a holder of the vehicle user service terminal from the vehicle user service terminal through a first server, and the vehicle control system receives the electronic key vehicle user service terminal from a second server through the vehicle user service terminal if the authentication succeeds.

In the vehicle control system according to another embodiment of the invention or any of the above embodiments, the vehicle control system receives, from the first server through the vehicle user service terminal, a service identifier regarding the express item to be sent and/or the express item to be received, wherein the electronic key corresponds to the service identifier.

In the vehicle control system according to another embodiment of the invention or any of the above embodiments, the electronic key and the service identifier are respectively associated with unique identifier information about the vehicle.

In the vehicle control system according to another embodiment of the invention or any of the above embodiments, the vehicle control system further comprises a vehicle positioning module that indicates the position of the vehicle to the holder of the vehicle user service terminal and/or to the vehicle user service terminal in response to a request from the vehicle user service terminal to the second server.

In the vehicle control system according to another embodiment of the invention or any of the above embodiments, said indicating the position of the vehicle comprises one or a combination of the following:
sending position information;
whistling; and
light flashing.

According to a second aspect of the invention, a vehicle control method is provided, comprising the steps of:
receiving a vehicle door unlocking signal sent from an electronic key provided in a vehicle user service terminal; and
opening at least one vehicle door of a vehicle based on the vehicle door unlocking signal.

In the vehicle control method according to an embodiment of the invention, the vehicle user service terminal obtains the electronic key through the following process:
authenticating, by a first server, identity information about a holder of the vehicle user service terminal; and
sending, by a second server, the electronic key to the vehicle user service terminal after it is learned that the identity information about the holder of the vehicle user service terminal is authenticated by the first server.

The vehicle control method according to another embodiment of the invention or any of the above embodiments further comprises the step of:
receiving, by the vehicle user service terminal, position information about the vehicle that is sent from the second server to the vehicle user service terminal, in order to help the holder of the vehicle user service terminal confirm the vehicle.

According to a third aspect of the invention, a vehicle control system is provided, comprising:
a first server for acquiring and authenticating identity information about a holder of a vehicle user service terminal from the vehicle user service terminal; and
a second server for issuing the electronic key to the vehicle user service terminal if it is learned that the authentication succeeds,
wherein the vehicle control system unlocks a vehicle door or storage box of the vehicle by means of the vehicle user service terminal receiving the electronic key issued from the second server; and
wherein the vehicle user service terminal is a terminal held by someone other than an owner of the vehicle.

In the vehicle control system according to an embodiment of the invention, the first server is further used for providing a service identifier to the vehicle user service terminal if the authentication succeeds,
wherein the electronic key corresponds to the service identifier.

In the vehicle control system according to another embodiment of the invention or any of the above embodiments, the vehicle control system acquires the service identifier from the first server through the vehicle user service terminal and serves the vehicle based on the service identifier.

In the vehicle control system according to another embodiment of the invention or any of the above embodiments, the service identifier is a service identifier regarding the express item to be sent and/or the express item to be received,
wherein the holder of the vehicle user service terminal performs, based on the service identifier, a service of picking up the express item to be sent and/or storing the express item to be received.

In the vehicle control system according to another embodiment of the invention or any of the above embodiments, the indication of the second server is further used for providing position information about the vehicle to the vehicle user service terminal.

In the vehicle control system according to another embodiment of the invention or any of the above embodiments, the electronic key is for one-time use.

In the vehicle control system according to another embodiment of the invention or any of the above embodiments, the electronic key and the service identifier are respectively associated with unique identifier information about the vehicle.

According to a fourth aspect of the invention, a vehicle control method is provided, comprising the steps of:
acquiring and authenticating identity information about a holder of a vehicle user service terminal from the vehicle user service terminal; and
issuing the electronic key to the vehicle user service terminal if it is learned that the authentication succeeds,
wherein the vehicle user service terminal is a terminal held by someone other than an owner of the vehicle.

The vehicle control method according to an embodiment of the invention further comprises the step of:
providing a service identifier to the vehicle user service terminal if the authentication succeeds, wherein the electronic key corresponds to the service identifier.

In the vehicle control method according to another embodiment of the invention or any of the above embodiments, the service identifier is a service identifier regarding the express item to be sent and/or the express item to be received.

The vehicle control method according to another embodiment of the invention or any of the above embodiments further comprises the steps of:
determining position information about the vehicle; and
providing the position information about the vehicle to the vehicle user service terminal.

According to a fifth aspect of the invention, a computer device is provided, comprising a memory, a processor, and a computer program stored on the memory and executable on the processor, characterised in that the processor, when executing the program, implements the steps of the method according to any one of the above fourth aspect.

According to a sixth aspect of the invention, a vehicle control method is provided, comprising the steps of:
receiving, by a vehicle user service terminal, an electronic key issued from a server; and sending a corresponding vehicle door unlocking signal based on the electronic key,
wherein the step of receiving occurs only if identity information about a holder of the vehicle user service terminal is authenticated.

The vehicle control method according to an embodiment of the invention further comprises the step of:
receiving, if the identity information about the holder of the vehicle user service terminal is authenticated, a service identifier that is issued from the server, wherein the electronic key corresponds to the service identifier.

The vehicle control method according to another embodiment of the invention or any of the above embodiments further comprises the steps of:
serving the vehicle based on the service identifier.

In the vehicle control method according to another embodiment of the invention or any of the above embodiments, the service identifier is a service identifier regarding the express item to be sent and/or the express item to be received.

The vehicle control method according to another embodiment of the invention or any of the above embodiments further comprises the steps of:
receiving position information about the vehicle.

In the vehicle control method according to another embodiment of the invention or any of the above embodiments, the method is implemented in the vehicle user service terminal in the form of an APP application.

In the vehicle control method according to another embodiment of the invention or any of the above embodiments, in the application process of the APP, the vehicle user service terminal is able to jump as needed to other application APPs for association.

According to a seventh aspect of the invention, a vehicle user service terminal is provided, comprising a memory, a processor, and a computer program stored on the memory and executable on the processor, characterised in that the processor, when executing the program, implements the steps of the method according to any one of the above sixth aspect.

According to an eighth aspect of the invention, a controller is provided, characterized in that the controller, when executing executable instructions stored in a memory, implements the steps of the method according to any one of the above second aspect.

According to a ninth aspect of the invention, a computer-readable storage medium is provided, having a computer program stored thereon, characterised in that the program is executable by a processor to implement the steps of the method according to any one of the above aspects.

A vehicle control system, comprising: a receiving sensor module, which is provided in a vehicle, and used for receiving a vehicle door unlocking signal sent from an electronic key provided in a vehicle user service terminal; and a vehicle control module, which is provided in the vehicle, and used for opening at least one vehicle door of the vehicle based on the vehicle door unlocking signal.

Preferably, the electronic key is for one-time use.

Preferably, the system further comprises: a first server, which is coupled to the vehicle user service terminal, and is used for acquiring and authenticating identity information about a holder of a vehicle user service terminal from the vehicle user service terminal; and a second server, which is coupled to the first server and the vehicle user service terminal, and is used for acquiring the result of the identity authentication from the first server, and sending the electronic key to the vehicle user service terminal if the authentication succeeds.

Preferably, the first server is further configured to provide, when the system is applied in an express receiving and sending scenario, a service identifier regarding an express item to be sent and/or an express item to be received, wherein the electronic key corresponds to the service identifier.

Preferably, the electronic key and the service identifier are respectively associated with unique identifier information about the vehicle.

Preferably, the system further comprises a vehicle positioning module that indicates the position of the vehicle to the holder of the vehicle user service terminal and/or to the vehicle user service terminal in response to a request from the vehicle user service terminal to the second server.

The invention further provides a vehicle control method, comprising the steps of: receiving a vehicle door unlocking signal sent from an electronic key provided in a vehicle user service terminal; opening at least one vehicle door of a vehicle based on the vehicle door unlocking signal.

Another objective of the invention is to provide an express item receiving and sending system that can facilitate delivery of express items.

To realize the above objective, the invention further provides the following technical solution:

A vehicle-based express item receiving and sending system, comprising: a vehicle user service terminal, which acquires a service identifier from a first server, and opens at least one vehicle door or a storage box of a vehicle based on an electronic key issued by a second server, for use by a holder of the vehicle user service terminal to pick up an express item to be sent and/or store an express item to be received; a first server, which is coupled to the vehicle user service terminal to provide the service identifier regarding the express item to be sent and/or the express item to be received; and the second server, which is communicably coupled to the vehicle user service terminal to issue the electronic key to the vehicle user service terminal, wherein the electronic key corresponds to the service identifier.

Preferably, the electronic key is for one-time use.

Preferably, the electronic key and the service identifier are respectively associated with unique identifier information about the vehicle.

The invention also further discloses a method for delivering express items based on a vehicle, comprising the steps of: acquiring, by a vehicle user service terminal from a first server, a service identifier regarding an express item to be sent and/or an express item to be received; acquiring, by the vehicle user service terminal, an electronic key from a second server; and opening, by the vehicle user service terminal, at least one vehicle door or a storage box of a vehicle by using the electronic key, wherein the electronic key corresponds to the service identifier.

While ensuring the safety of the user's vehicle, the vehicle control system provided by the embodiments of the invention can not only simplify the work of the holder of the vehicle user service terminal, thereby significantly improving productivity of the holder, but also save time and provide great convenience for the user of the electric vehicle. In the scenario of express item receiving and sending delivery, the express item receiving and sending system and the method for delivering express items based on a vehicle provided by the invention help to ensure that the express item will not be delivered to a wrong address, thereby improving the efficiency of the entire express delivery industry.

### Brief Description of the Drawings

FIG. 1 shows a schematic diagram of a module structure of a vehicle-based express item receiving and sending system provided by a first embodiment of the invention.
FIG. 2 shows a schematic diagram of a module structure of a vehicle control system provided by a second embodiment of the invention.
FIG. 3 shows a timing chart of the process of performing in-vehicle package collecting for the first time according to a specific embodiment.
FIG. 4 shows a timing chart of the process in which a user places an order for to-vehicle package collecting according to a specific embodiment.
FIG. 5 shows a timing chart of the process of starting package collecting according to a specific embodiment.
FIG. 6 shows a timing chart of the process of to-vehicle package sending according to a specific embodiment.

### Detailed Description of Embodiments

Specific details are presented in the following description in order to provide a thorough understanding of the invention. However, those skilled in the art will clearly know that embodiments of the invention can be implemented even without these specific details. In the invention, specific numerical references may be made, such as "first element", "second apparatus" and so on. However, specific numerical references should not be understood as having to comply with their literal order, but instead, it should be understood that "first element" and "second element" are different.

The specific details proposed by the invention are only exemplary, and the specific details may vary, but still fall within the spirit and scope of the invention. The term "couple" is defined to mean being directly connected to a component or indirectly connected to a component via another component.

Hereinafter, preferred embodiments of the method, system and apparatus suitable for implementing the invention will be described with reference to the drawings. Although the embodiments are described for a single combination of elements, it should be understood that the invention comprises all possible combinations of the disclosed elements. Therefore, if one embodiment comprises elements A, B, and C, and the second embodiment comprises elements B and D, the invention should also be considered to comprise other remaining combinations of A, B, C, or D, even if not explicitly disclosed.

In the examples of the invention, an electric vehicle is used as a specific example of the vehicle for illustration, but it should be conceivable for those skilled in the art that the method of the examples of this application can be applied to hybrid vehicles and traditional fuel vehicles.

Moreover, in the following examples, the method shown in the invention is applied in the express delivery service for illustration, but those skilled in the art should also understand that the method of this application can be adopted in other application scenarios, for example, service scenarios, such as valet battery swapping services, and valet parking, that need the opening of the vehicle door of the owner after the owner's authorization. In the valet battery swapping service, the service personnel (that may be called a battery swapping boy) who helps the owner to swap the battery, the vehicle door that he or she opens is not necessarily the trunk door in the following examples described in combination with the express delivery service scenario, but instead a vehicle door. Similarly, it is also true for the case of valet parking. However, in some scenarios, whether it is the scenario of an express delivery service, a valet battery swapping service, or a valet parking service, all vehicle doors of the vehicle may be opened.

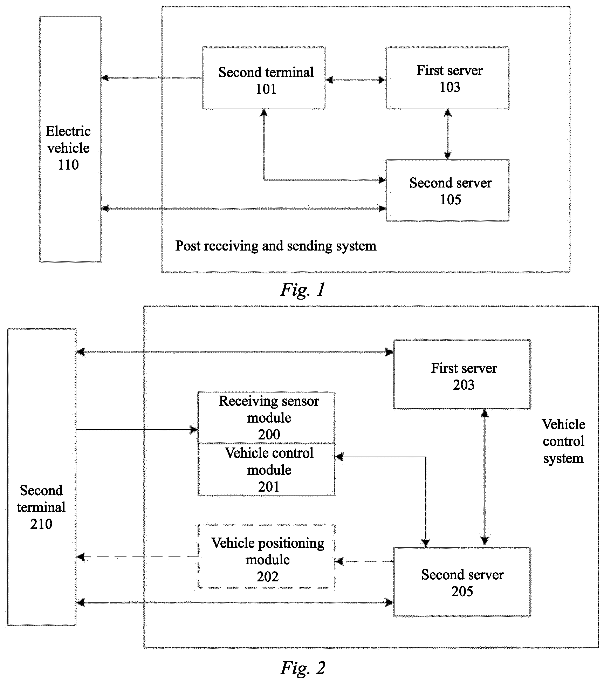

As shown in FIG. 1, the first embodiment of the invention provides a vehicle-based express item receiving and sending system. The system comprises a second terminal 101, a first server 103, and a second server 105, which are communicatively coupled to each other. The second server 105 can also be communicatively coupled to an electric vehicle 110 to provide cloud services. The second terminal 101 is a vehicle user service terminal, which may be a terminal held by a user of the vehicle, or someone other than the owner of the vehicle. The terminal may be a mobile terminal, such as a mobile phone. It will be understood that the user or owner of the vehicle refers to a user who has the authority to open the vehicle door (including the trunk) of the vehicle, wherein the authority is not from the vehicle control system of this application, for example, not from the second server in the following example. For example, the user or owner per se of the vehicle has a key to open the vehicle door.

Specifically, the second terminal 101 acquires, through communication with the first server 103, a service identifier issued by the first server 103, and the holder of the second terminal can provide a delivery service for an express item, a parcel, etc., to the user by using the service identifier, and then pick up, from the user, the express item to be sent, or transfer to the user the express item to be received. The service identifier is a valid credential indicating that the holder of the second terminal can perform the delivery service. In other words, without holding the service identifier, the holder of the second terminal will not be able to deliver the express item. It should be noted that the service identifier is a valid credential for conducting the delivery service in this specific example, but in other application scenarios, such as in the valet battery swapping service mentioned in this application, it is a valid credential for confirming whether the holder of the terminal can perform the valet battery swapping service. Accordingly, in other types of service scenarios, the service identifier is a valid credential for verifying whether the holder of the terminal can perform this type of service.

The second terminal 101 can also acquire, via communication with the second server 105, an electronic key issued by the second server 105, for use by the holder of the second terminal to open the storage box of the parked vehicle, so that the holder of the second terminal can pick up, from the storage box, the express item to be sent and/or can store therein the express item to be received. It can be understood that the same express item receiving and sending user may need to receive a certain express item and send another parcel at the same time. At this moment, the holder of the second terminal who has obtained the service identifier can take out the parcel from the storage box and put the express item into it.

At the first server 103 side, it is communicatively coupled to the second terminal 101. In the initialization phase, the holder of the second terminal requests, via the smart terminal that he or she holds, for registration with the first server 103, thus being eligible to provide the express item delivery service. After the express item delivery service is started (it can be started by the holder of the second terminal or by the express item receiving and sending user), the first server 103 will start the process of identity authentication, in which it acquires and authenticates identity information from the holder of the second terminal and/or from the second terminal 101. Through identity authentication, it can confirm whether the holder of the second terminal is a qualified holder of the second terminal, and whether the second terminal 101 is a real valid terminal, which helps to prevent criminals from stealing express items or vehicles. After the identity information about the holder of the second terminal and/or about the second terminal is authenticated (preferably, the identity information about both the holder of the second terminal and the second terminal needs to be authenticated), the first server 103 further provides, to the second terminal 101, a service identifier regarding the express item to be sent and/or the express item to be received.

At the second server 105 side, it is communicatively coupled to the first server 103, and is also communicatively coupled to multiple electric vehicles 110. During the process of communicative coupling between the second server 105 and the first server 103, both of them can determine whether the other party is trustworthy by verifying each other's digital certificates. If the certificate does not exist or is illegal, the subsequent express item delivery service will not be started.

During the process of initialization, the express item receiving and sending user registers his or her vehicle-related information with the second server 105, and thus will be able to accept information or instructions sent from the second server. After the express item delivery service is started, the second server 105 can acquire the result of identity authentication (on the holder of the second terminal, and the second terminal 101) from the first server 103. In addition, the second server 105 is also communicatively coupled to the second terminal 101 so as to issue an electronic key to the second terminal 101 after the identity authentication is completed. With this electronic key, when getting close to a vehicle where the express item receiving and sending user has parked somewhere, the holder of the second terminal will be able to open the storage box of the vehicle.

The electronic key corresponds to the service identifier. Specifically, the electronic key can correspond to the service identifier on a one-to-one basis, or form a one-to-many correspondence, that is: the holder of the second terminal can hold an electronic key to open the storage box of the relevant vehicle at one time, and simultaneously deliver multiple express items and parcels.

In order to realize the correspondence between the electronic key and the service identifier, in a specific implementation, the service identifier may first be associated with unique identifier information about the vehicle, wherein the association is implemented by the first server 103. Next, the second server 105 associates the unique identifier information about the vehicle with an electronic key that is generated, or directly uses this unique identifier information to generate the electronic key. Therefore, the electronic key and the service identifier can form a corresponding correspondence.

For the safety of the user's vehicle, the electronic key is preferably for one-time use only. In other words, one electronic key can only be used to open the storage box once (in the case where there are multiple express items needing to be sent or stored at the user side, but only one electronic key is generated, the same is true), and then the electronic key will be invalidated.

At the vehicle side, a vehicle positioning module may be provided in the vehicle, which may indicate the current position of the vehicle to the holder of the second terminal and/or to the second terminal 101 in response to a request sent by the second terminal 101 to the second server 105. The current position comprises, but is not limited to: geographical coordinates, road name of the place where the vehicle is parked, and a community name.

The position of the vehicle can be indicated in the following manners: sending information about the current position of the vehicle to the second terminal 101; the vehicle itself whistling; and light flashing.

The vehicle may also comprise a vehicle control module that can control the opening and/or closing of the storage box based on the receiving of a control signal of the electronic key. Preferably, the vehicle control module can open the storage box of the vehicle only once in response to the electronic key. Thereafter, the vehicle control module will no longer respond to the same electronic key. This can help to protect the safety of the user's vehicle.

Given that the electric vehicle has a large amount of power supply that can maintain vehicle networking, in the first embodiment described above, the vehicle can be found through the network and the electronic key (such as an NFC key), for example, to provide the position of the vehicle to the courier, and to help the courier find the vehicle quickly by methods such as whistling and light flashing. Furthermore, the vehicle can be unlocked to open the storage box, and with security measures such as authenticating the courier's authority (for example, authenticating whether he or she has the corresponding service identifier), while ensuring the safety of the vehicle, the courier can be enabled to deliver the express item to the user's vehicle, and take from the user's vehicle the express item that needs to be sent.

In short, by adding structural features to the vehicle that can be used to receive and send express items, the vehicle is configured to possess the effect of a third living room, which not only simplifies the work of the holder of the second terminal, but also provides the user with great convenience for receiving and sending, and also helps to ensure that the express item will not be delivered to a wrong address, thereby improving the efficiency of the entire express delivery industry.

As shown in FIG. 2, the second embodiment of the invention provides a vehicle control system. This system can be used to control the opening of the interior space of a vehicle, and comprises a receiving sensor module and a vehicle control module. Specifically, the receiving sensor module is provided in the vehicle, and is used for receiving a vehicle door unlocking signal sent from an electronic key provided in the second terminal. The vehicle control module is also provided in the vehicle, and is used for opening at least one vehicle door of the vehicle based on the vehicle door unlocking signal.

As a further improvement, the vehicle control system further comprises a first server and a second server. The first server is coupled to the second terminal, and can acquire and authenticate identity information about a holder of the second terminal from the second terminal. The second server is coupled to the first server and the second terminal, respectively, and acquires the result of the identity authentication from the first server, and sends the electronic key to the second terminal if the result of the authentication indicates that the authentication succeeds.

This vehicle control system can be used to facilitate express item receiving and sending, parking services, vehicle inspection services, battery charging and swapping services, etc. In these applications, service personnel can temporarily open the storage box or the vehicle door of the vehicle when the owner of the vehicle is not present, so as to carry out operations such as express item delivery, parking, vehicle maintenance, and battery charging and swapping, without obtaining long-time control over the vehicle. As a result, these applications save the owner of the vehicle a lot of time while ensuring the safety of the vehicle.

Hereinafter, the specific application of the above vehicle control system in the express item delivery service will be illustrated.

In order to facilitate delivery or receiving and sending of express items, the improved vehicle control system comprises a receiving sensor module 200 and a vehicle control module 201, and may further comprise a first server 203 and a second server 205. Optionally, the system may further comprise a vehicle positioning module 202.

Specifically, the vehicle control module 201 opens the storage box of the vehicle based on the electronic key received by the receiving sensor module 200 from a second terminal 210, for use by the holder of the second terminal to pick up an express item to be sent and/or store the express item to be received.

The first server 203 is coupled to the second terminal 210, so that the first server 203 can acquire and authenticate identity information from the holder of the second terminal and/or the second terminal, and then provide a service identifier regarding the express item to be sent and/or the express item to be received, wherein the service identifier is a unique credential indicating that the holder of the second terminal can provide express item delivery service to relevant users.

The second server 205 is communicatively coupled to the first server 203, and acquires the result of identity authentication from the first server 203. The second server 205 can also be communicatively coupled to multiple second terminals 210 to issue corresponding electronic keys to each of the second terminals 210 after corresponding identity authentication is completed. The electronic key corresponds to the service identifier. For example only, the electronic key and the service identifier respectively contain unique identifier information associated with the vehicle. Preferably, the electronic key is only for one-time use. For example, it can be used to control the storage box of the corresponding vehicle to be opened only once for a duration of 30 seconds. Then, the storage box will be automatically closed, and the electronic key will be invalidated.

In the second embodiment of the invention, the vehicle positioning module 202 is an optional module that is communicatively coupled at least to the second server 205, so that it can indicate the position of the vehicle to the holder of the second terminal via the second server 205 in response to a request of the second terminal 210 to the second server 205, for example, send the position information about the vehicle to the second terminal 210. Alternatively, according to the request of the second terminal 210, the second server 205 instructs the vehicle control module 201 to control the electric vehicle to whistle or to flash with the lights in order to attract the attention of the holder of the second terminal, so that the holder of the second terminal can find the vehicle quickly.

As a further improvement, the storage box can be arranged as a separate storage box for express items and parcels at a certain position on the electric vehicle, or it can be integrated with the trunk. The holder of the second terminal who holds the electronic key can only open the storage box, and always cannot obtain control over the vehicle, or even cannot open the vehicle door.

In some embodiments of the invention, at least part of the system may be implemented using a set of distributed computing devices connected to a communication network, or be implemented based on "cloud". In such a system, multiple computing devices operate together to provide services by using their shared resources.

As an example, the first server 203 is installed in the express delivery company service cloud, and is used to manage holders of second terminals, and second terminals, and to implement the express item receiving and sending service in response to an express item delivery request initiated by the user. The second server is installed on the electric vehicle service cloud, and is used to monitor the networked electric vehicles or provide cloud services thereto.

"Cloud-based" implementations can provide one or more advantages, comprising: openness, flexibility and expandability, central manageability, reliability, scalability, optimization of computing resources, the ability to aggregate and analyze information across multiple users, connecting across multiple geographic areas, and the ability to use multiple mobile or data network operators for network connectivity.

A further improved embodiment of the invention can be implemented as various electric vehicles networked with electric vehicle service cloud. Among them, each electric vehicle is respectively configured with a storage box for storing the user's express items to be sent or express items to be received, and delivery of the express items is implemented by the holder of the second terminal who holds the electronic key. Each electric vehicle also comprises the vehicle control module 201 and the optional vehicle positioning module 202 provided in the second embodiment described above.

Specifically, the vehicle control module 201 is communicatively coupled to the electric vehicle service cloud, the electric vehicle service cloud is communicatively coupled to the express delivery company service cloud, and the express delivery company service cloud is then communicatively coupled to multiple second terminals, thus implementing various business processes involved in the express item delivery service.

The invention further involves a third embodiment, which provides a vehicle control method, comprising the following steps: step one: receiving a vehicle door unlocking signal sent from an electronic key provided in a second terminal; and step two: opening at least one vehicle door of a vehicle based on the vehicle door unlocking signal.

As an improvement, the method further specifically comprises: step three: requesting a first server to authenticate identity information about a holder of the second terminal; and step four: requesting a second server to send the electronic key to the second terminal after it has learned that the above identity information is authenticated. These two steps can be performed before steps one and two.

Preferably, the method further comprises: requesting the second server to indicate the position of the vehicle to the second terminal, so that relevant service personnel can find the vehicle quickly.

The invention further provides a fourth embodiment, which is implemented as a method for delivering express items based on a vehicle. The method comprises the following steps: step one: acquiring, by a second terminal from a first server, a service identifier regarding an express item to be sent and/or an express item to be received; step two: acquiring, by the second terminal, an electronic key from a second server; and step three: opening, by the second terminal, at least one vehicle door or a storage box of a vehicle by using the electronic key, wherein the electronic key corresponds to the service identifier.

Hereinafter, a specific example in which this method is implemented will be illustrated: Firstly, the holder of the second terminal uses the second terminal to acquire the service identifier from the first server. Secondly, the holder of the second terminal uses the second terminal to acquire the electronic key from the second server. Next, the holder of the second terminal uses the electronic key to open the storage box or the vehicle door. Finally, the holder of the second terminal can directly pick up the express item to be sent or store the express item to be received.

As a further improvement, the method may further comprise an authentication process, which comprises: the second terminal provides identity information about the holder of the second terminal or about the second terminal to the first server, so that the first server can authenticate the identity information, and then issue the service identifier regarding the express item to be sent and the express item to be received; and at the second server side, after the second server learns from the first server that this identity information is authenticated, the second terminal can acquire the electronic key from the second server to open the storage box or the vehicle door of the user's vehicle.

According to another embodiment of the invention, a computer storage medium is provided, which stores a batch of computer-executable instructions. These computer-executable instructions, when being executed by a processor, can implement the vehicle control method provided in the third embodiment described above, or the method for delivering express items based on a vehicle provided in the fourth embodiment.

According to yet another embodiment of the invention, a controller is further provided, wherein the controller, when executing executable instructions stored in a memory, will execute the various steps of the vehicle control method provided in the third embodiment described above, or the method for delivering express items based on a vehicle provided in the fourth embodiment.

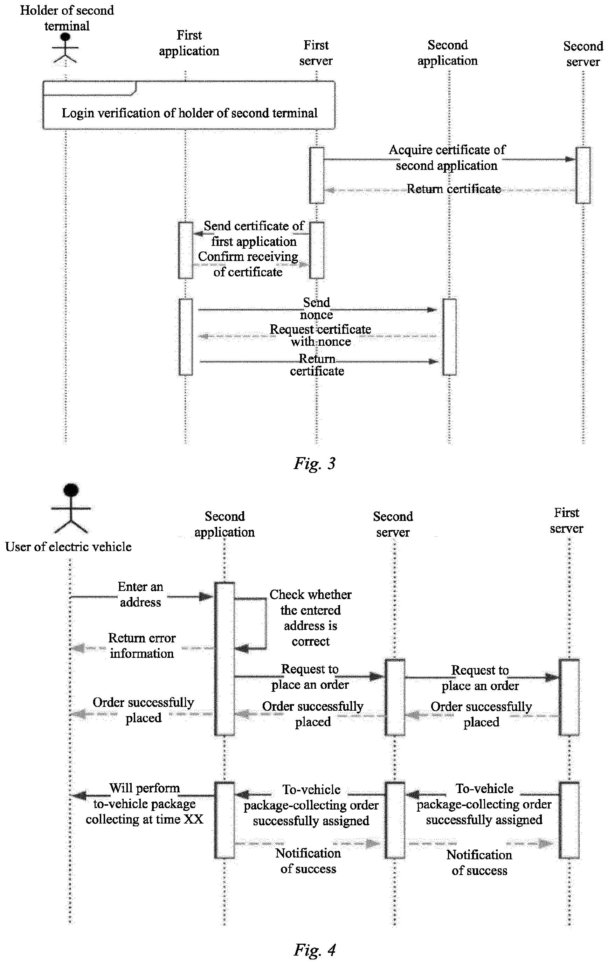

Some more specific embodiments regarding post delivery are given below, and FIGs. 3 to 6 are schematic diagrams of some specific embodiments. The second terminal is held by the holder (e.g., a courier) of a vehicle user service terminal, and it has a first application and a second application installed inside, wherein via the first application, the holder of the second terminal communicates with the first server (the express delivery company service cloud), and via the second application, the holder of the second terminal further communicates with the second server (the electric vehicle service cloud).

The timing chart of the process of performing in-vehicle package collecting for the first time is shown in FIG. 3, which shows the situation of using the second application for vehicle searching for the first time. When starting to perform to-vehicle package collecting, the holder of the second terminal will jump from a package-collecting order in the first application to the second application. When jumping, the holder needs to take along an order number, courier ID information, and a nonce that are returned from the express delivery company, etc. After the holder jumps to the second application, the second application will acquire a certificate from the first application and determine whether the certificate is legal. If the certificate does not exist or if the courier ID and second terminal ID are different from those provided when the courier applied for the certificate, the courier is prompted that he or she needs to re-apply for a certificate, i.e., to apply according to the process of using the first application for the first time. If there is no problem with the certificate, it will be checked whether an NFC key corresponding to this order exists, and if it does not exist, the second application will apply for an NFC key from the second server.

The timing chart of the process in which a user places an order for to-vehicle package collecting is as shown in FIG. 4. If the user of the electric vehicle wants to use the express-to-vehicle package collecting service, he or she needs to place an order on the second application and enter the detailed address where the vehicle is located. If the address and other information entered by the user are not detailed enough, the second application will remind the user, and if the address and other requirements are met, the second server requests the first server to place an order, and the first server needs to return an order number generated by the express delivery company for this order. After the express delivery company completes the assignment of the package-collecting order and determines a specific courier, it is necessary to call a notification interface provided by the second server, and send the courier ID of the courier who is about to come to collect packages from domicile, the ID of the vehicle user service terminal used by the courier, and the expected visit time to the second server via the interface. Thereafter, the second server will notify the user of the electric vehicle as appropriate.

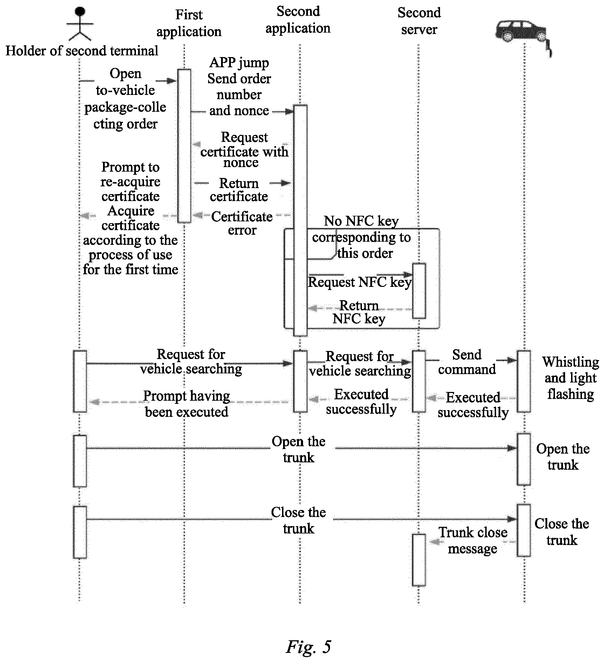

The timing chart of the process in which the courier starts package collecting is as shown in FIG. 5. When starting to perform to-vehicle package collecting, the courier will jump from a package-collecting order in the first application to the second application. When jumping, the courier needs to take along an order number, courier ID information, and a nonce that are returned from the express delivery company, etc. After the holder jumps to the second application, the second application will acquire a certificate from the first application and determine whether the certificate is legal. If the certificate does not exist or if the courier ID and vehicle user service terminal ID are different from those provided when the courier applied for the certificate, the courier is prompted that he or she needs to re-apply for a certificate, i.e., to apply according to the process of using the first application for the first time. If there is no problem with the certificate, it will be checked whether an NFC key corresponding to this order exists, and if it does not exist, the second application will apply for an NFC key from the second server. (Before the vehicle searching, it is necessary to jump to open the second application in the place where there is a network signal, otherwise it is impossible to download the NFC Key, thus making it impossible to open the trunk).

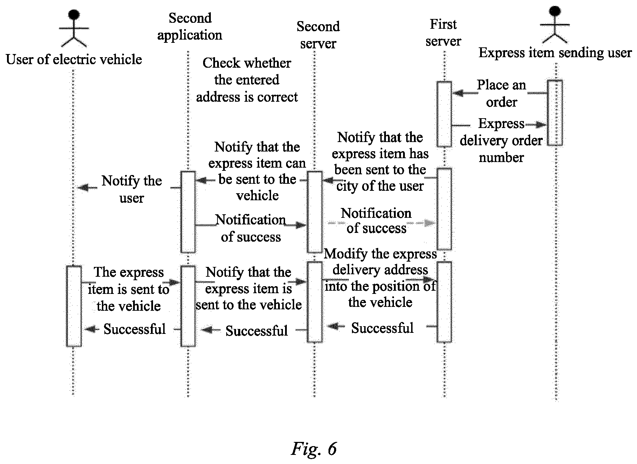

During the vehicle searching, the courier clicks a vehicle searching button on the second application. After receiving a server command, the electric vehicle will perform the operations of whistling and light flashing, and display vehicle-related information such as the license plate number of the vehicle, and color, as well as the user's remarks for the parking space (if any). When opening the vehicle door, the courier can open the vehicle door by using the NFC key. After collecting the express item, the entire collection process is completed by closing the rear door. The process of express delivery into the vehicle is similar to the process of collecting an express item from the vehicle. FIG. 6 shows a timing chart of the process of to-vehicle package sending. When the express item sent to the user of an electric vehicle is delivered to the city where the user is, the user will be prompted whether to send the express item to the vehicle. When the user decides to send the vehicle to the vehicle, the background will notify the express delivery company to send the express item to the position of the vehicle, and provide specific position information about the vehicle.

It should be noted that the first server and the second server described in the above examples may be different sub-modules or different sub-components of the same server, and the first server and the second server may be implemented by servers with computing functions, for example, at different positions, or be implemented in different operators.

The foregoing description is only provided for preferred embodiments of the invention and is not intended to limit the scope of the invention. Those skilled in the art may make various variation designs without departing from the concept and appended claims of the invention.

## Claims

1. A vehicle control system, comprising:
a receiving sensor module, which is provided in a vehicle, and used for receiving a vehicle door unlocking signal sent from an electronic key provided in a vehicle user service terminal; and
a vehicle control module, which is provided in the vehicle, and used for opening at least one vehicle door of the vehicle based on the vehicle door unlocking signal,
wherein the vehicle user service terminal is a terminal held by someone other than an owner of the vehicle.

2. The system according to claim 1, **characterised in that** the electronic key is for one-time use.

3. The system according to claim 1, the electronic key being an NFC key.

4. The system according to claim 1, **characterised in that** the vehicle control system acquires and authenticates identity information about a holder of the vehicle user service terminal from the vehicle user service terminal through a first server, and the vehicle control system receives the electronic key vehicle user service terminal from a second server through the vehicle user service terminal if the authentication succeeds.

5. The system according to claim 4, **characterised in that** the vehicle control system receives, from the first server through the vehicle user service terminal, a service identifier regarding the express item to be sent and/or the express item to be received, wherein the electronic key corresponds to the service identifier.

6. The system according to claim 5, **characterised in that** the electronic key and the service identifier are respectively associated with unique identifier information about the vehicle.

7. The system according to claim 4, **characterised in that** the vehicle control system further comprises a vehicle positioning module that indicates the position of the vehicle to the holder of the vehicle user service terminal and/or to the vehicle user service terminal in response to a request from the vehicle user service terminal to the second server.

8. The system according to claim 7, **characterised in that** said indicating the position of the vehicle comprises one or a combination of the following:
sending position information;
whistling; and
light flashing.

9. A vehicle control method, **characterized by** comprising the steps of:
receiving a vehicle door unlocking signal sent from an electronic key provided in a vehicle user service terminal; and
opening at least one vehicle door of a vehicle based on the vehicle door unlocking signal.

10. The method according to claim 9, **characterised in that** the vehicle user service terminal obtains the electronic key through the following process:
authenticating, by a first server, identity information about a holder of the vehicle user service terminal; and
sending, by a second server, the electronic key to the vehicle user service terminal after it is learned that the identity information about the holder of the vehicle user service terminal is authenticated by the first server.

11. The method according to claim 10, **characterised by** further comprising the step of:
receiving, by the vehicle user service terminal, position information about the vehicle that is sent from the second server to the vehicle user service terminal, in order to help the holder of the vehicle user service terminal confirm the vehicle.

12. A vehicle control system, comprising:
a first server for acquiring and authenticating identity information about a holder of a vehicle user service terminal from the vehicle user service terminal; and
a second server for issuing the electronic key to the vehicle user service terminal if it is learned that the authentication succeeds,
wherein the vehicle control system unlocks a vehicle door or storage box of the vehicle by means of the vehicle user service terminal receiving the electronic key issued from the second server; and
wherein the vehicle user service terminal is a terminal held by someone other than an owner of the vehicle.

13. The system according to claim 12, **characterised in that** the first server is further used for providing a service identifier to the vehicle user service terminal if the authentication succeeds,
wherein the electronic key corresponds to the service identifier.

14. The system according to claim 13, **characterised in that** the vehicle control system acquires the service identifier from the first server through the vehicle user service terminal and serves the vehicle based on the service identifier.

15. The system according to claim 14, **characterised in that** the service identifier is a service identifier regarding the express item to be sent and/or the express item to be received,
wherein the holder of the vehicle user service terminal performs, based on the service identifier, a service of picking up the express item to be sent and/or storing the express item to be received.

16. The system according to claim 12, **characterised in that** the indication of the second server is further used for providing position information about the vehicle to the vehicle user service terminal.

17. The system according to claim 12, **characterised in that** the electronic key is for one-time use.

18. The system according to claim 13, **characterised in that** the electronic key and the service identifier are respectively associated with unique identifier information about the vehicle.

19. A vehicle control method, **characterized by** comprising the steps of:
acquiring and authenticating identity information about a holder of a vehicle user service terminal from the vehicle user service terminal; and
issuing the electronic key to the vehicle user service terminal if it is learned that the authentication succeeds,
wherein the vehicle user service terminal is a terminal held by someone other than an owner of the vehicle.

20. The method according to claim 19, **characterised by** further comprising the step of:
providing a service identifier to the vehicle user service terminal if the authentication succeeds, wherein the electronic key corresponds to the service identifier.

21. The method according to claim 20, **characterised in that** the service identifier is a service identifier regarding the express item to be sent and/or the express item to be received.

22. The method according to claim 21, **characterised by** further comprising the steps of:
determining position information about the vehicle; and
providing the position information about the vehicle to the vehicle user service terminal.

23. A computer device, comprising a memory, a processor, and a computer program stored on the memory and executable on the processor, **characterised in that** the processor, when executing the program, implements the steps of the method according to any one of claims 19-22.

24. A vehicle control method, **characterized by** comprising the steps of:
receiving, by a vehicle user service terminal, an electronic key issued from a server; and sending a corresponding vehicle door unlocking signal based on the electronic key,
wherein the step of receiving occurs only if identity information about a holder of the vehicle user service terminal is authenticated.

25. The method according to claim 24, **characterised by** further comprising the step of:
receiving, if the identity information about the holder of the vehicle user service terminal is authenticated, a service identifier that is issued from the server, wherein the electronic key corresponds to the service identifier.

26. The method according to claim 24, **characterised by** further comprising the step of:
serving the vehicle based on the service identifier.

27. The method according to claim 24, **characterised in that** the service identifier is a service identifier regarding the express item to be sent and/or the express item to be received.

28. The method according to claim 24, **characterised by** further comprising the step of:
receiving position information about the vehicle.

29. The method according to claim 24, **characterised in that** the method is implemented in the vehicle user service terminal in the form of an APP application.

30. The method according to claim 24, **characterised in that** in the application process of the APP, the vehicle user service terminal is able to jump as needed to other application APPs for association.

31. A vehicle user service terminal, comprising a memory, a processor, and a computer program stored on the memory and executable on the processor, **characterised in that** the processor, when executing the program, implements the steps of the method according to any one of claims 24-30.

32. A controller, **characterized in that** the controller, when executing executable instructions stored in a memory, implements the steps of the method according to any one of claims 9 to 11.

33. A computer-readable storage medium having a computer program stored thereon, **characterised in that** the program is executable by a processor to implement the steps of the method according to any one of claims 9-11, 19-22 and 24-30.
